# EUROPEAN PATENT SPECIFICATION

(11) **EP 3 379 046 B1**
(45) Date of publication and mention of the grant of the patent: **09.09.2020**
(21) Application number: 17162772.2
(22) Date of filing: 24.03.2017
(51) Int. Cl.: F01N 3/20, F01N 3/28, B01F 5/00

(54) **EXHAUST GAS AFTERTREATMENT SYSTEM**
ABGASNACHBEHANDLUNGSSYSTEM
SYSTÈME DE POST-TRAITEMENT DE GAZ D'ÉCHAPPEMENT

(43) Date of publication of application: 26.09.2018
(73) Proprietor: Volvo Car Corporation, 40 531 Göteborg (SE)
(72) Inventor: Sandberg, Peter, 41743 Göteborg (SE); Stenfeldt, Marie, 43537 Mölnlycke (SE); Samei, Elnaz, 41762 GÖTEBORG (SE); Svensson, Mattias, 42372 SÄVE (SE)
(74) Representative: Kransell & Wennborg KB

(56) References cited:
- EP-A1- 2 700 442
- EP-A1- 2 732 869
- EP-A1- 3 015 672

## Description

### TECHNICAL FIELD

This invention relates to an exhaust gas aftertreatment system for an internal combustion engine according to the preamble of claim 1. In particular, the invention relates to evaporation of liquid reductant at low temperature conditions. The invention also relates to a vehicle provided with an internal combustion engine and an exhaust gas aftertreatment system of the above type.

### BACKGROUND OF THE INVENTION

To fulfil current emission legislations, most vehicles with internal combustion engines are today provided with an exhaust gas aftertreatment device comprising a catalytic converter arranged in an exhaust duct for reduction of exhaust gas emissions. The catalytic converter generally consists of a tubular, longitudinal body with an inlet and an outlet, where the inlet is in fluid communication with the outlet. The catalytic converter usually comprises at least one catalytic converter substrate in a channelled structure arranged between the inlet and outlet. Exhaust gases can pass through the channelled structure while being exposed to a large surface area of the catalytic converter. The inlet of the catalytic converter receives exhaust gas emissions from the internal combustion engine and the outlet is arranged for discharging exhaust gas emissions treated in the catalytic converter.

The most frequently used catalytic converter structure for petrol engines is generally Three Way Catalyst (TWC). For diesel engines generally Diesel Oxidation Catalyst (DOC) and Lean NOx Trap (LNT) are most frequently used. It is also common that the above mentioned catalytic converter structures are supplemented by a catalytic nitrogen oxide (NOx) converter, such as a substrate with selective catalytic reduction (SCR) functionality for improved NOx reduction. For substrates with SCR functionality, a liquid or gaseous reductant is introduced in the gas emission flow upstream the SCR substrate so that the reductant can mix with the exhaust gas emissions before reaching the SCR substrate.

When using liquid reductant, such as a urea solution ("AdBlue"), the liquid reductant is sprayed into the exhaust duct upstream the catalytic NOx converter so that the liquid reductant can evaporate and mix with the exhaust gases before entering the catalytic NOx converter. Heat transferred from the exhaust gases is used for evaporating the liquid reductant. Sufficient mixture of the reductant is important for optimal reduction of NOx in the SCR substrate and for the SCR substrate to work properly.

Known SCR exhaust gas aftertreatment systems may work well during normal operation conditions when the exhaust gas temperature is relatively high, at least if these system are well adapted to the small space available in modern vehicles (which requires the system to be very compact with only a short distance between reductant inlet and NOx converter, which in turn requires the liquid reductant to be evaporated and mixed during a very short time period). However, a general disadvantage of conventional SCR exhaust gas aftertreatment systems is that the liquid reductant is not evaporated sufficiently at lower temperature levels, i.e. typically in low-load situations common for, for instance, light-duty vehicles with low fuel consumption. This might lead to wetting of the relatively cold walls in the exhaust duct and reduction deposit formation on the walls and other components of the exhaust duct.

A common solution to this problem is to use engine measures to raise the temperature in the exhaust gas system, such as fuel post injection (i.e. late injection of fuel for utilizing the combustion heat in the exhaust gas system). Main disadvantage of such measures are increased fuel consumption, oil dilution and formation of soot in the oil.

To increase the rate of evaporation, with or without engine measures, it has been proposed to let reductant droplets impinge on a plate or similar in the exhaust duct to reduce the size of the droplets. US6074619 discloses a process where the exhaust gas, loaded with spray droplets, is passed in a zig-zag flow pattern through the spaces between the plates of a series of stacks of parallel plates arranged in the exhaust duct. Droplets larger than a critical diameter impinge on the plates and get reduced in size. Although the stacks of plates may be efficient in reducing the droplet size, US6074619 discloses no means for preventing that the spray of reductant hits the (relatively cold) duct walls upstream of the plate stacks and forms deposits.

There is thus a need for an improved SCR exhaust gas aftertreatment device adapted to low temperature conditions.

EP2700442 discloses a device having a carrier body comprising oppositely arranged long side walls and oppositely arranged short side walls. The short side walls interconnect the long side walls with each other. Multiple guide vanes are arranged at one of the long side walls at axial ends. The vanes are extended towards the long side walls and engaged with respect to an axial direction. One of the ends of one of the long side walls is displaced at certain distance with respect to the other end of the other long side wall in the direction, where the latter axial end is arranged on a side of the device. An independent claim is also included for an exhaust system for an internal combustion engine of a motor car.

EP2732869 discloses a mixing arrangement for use in an exhaust system comprises an exhaust duct and a mixing duct arranged inside the exhaust duct. A mixer configuration is arranged inside the mixing duct. The mixing arrangement further comprises a gap arranged between mixing duct and exhaust duct, wherein the gap comprises an inlet opening adapted to enable an exhaust fluid to enter the gap for surrounding at least part of the length of the mixing duct.

EP3015672 discloses an exhaust gas treatment device for an exhaust system of an internal combustion engine having a housing through which an exhaust path passes with an injector arranged on the housing for introducing a reducing agent into one the exhaust gas path following exhaust gas flow.

### SUMMARY OF THE INVENTION

An object of this invention is to provide an exhaust gas aftertreatment system for an internal combustion engine that exhibit improved properties compared to conventional systems to evaporate a liquid reductant, in particular in low-temperature situations. This object is achieved by the system defined by the technical features contained in claim 1. The dependent claims contain advantageous embodiments, further developments and variants of the invention.

The invention concerns an exhaust gas aftertreatment system for an internal combustion engine, said system comprising: an exhaust duct allowing a through-flow of exhaust gas; a catalytic NOx converter arranged in the exhaust duct; a fluid inlet arranged to introduce a liquid reductant into the exhaust duct upstream the catalytic NOx converter; and a plate structure comprising a plurality of reductant droplet impinging plates arranged in a row in a longitudinal direction of the exhaust duct so as to force at least a portion of the exhaust gas to flow in a zig-zag pattern along a portion of the exhaust gas duct and thereby bring about impingement of reductant droplets introduced into the exhaust duct on the impingement plates during operation of the internal combustion engine,.

The invention is defined by the appending claims.

Accordingly, the liquid reductant is introduced, typically injected by a nozzle, into a box-like target space in the exhaust duct, which space is delimited by impingement plates and also by side walls. This prevents the reductant droplets from hitting the (cold) outer walls of the exhaust duct.

A first reason for this effect is that the reductant is initially directed into the target space, which prevents reductant to directly hit the outer duct wall upstream of the impingement plates (which is not prevented in e.g. the arrangement disclosed in US6074619).

A second reason is that the side walls of the target space prevent droplets from splashing sideways from the first or second impingement plate onto the outer duct wall. Some of the reductant may be allowed to hit an inside of the side walls before reaching the impingement plates.

A third reason is that the box-like target space defines a cross-sectional portion of the exhaust duct within which the reductant droplets will be present (except for very small droplets that easily diffuse sideways, which is not a problem since very small droplets quickly evaporate). This means that it is possible to obtain control of the downstream position and flow of the reductant droplets and thereby prevent that droplets hit the duct outer walls downstream of the reductant target space.

Preferably, the plate structure is designed to control the flow of droplets some distance downstream the target space using one or several additional impingement plates. The exact design of the plate structure can be adapted to the particular application (particular exhaust gas mass flow and velocity, amount of reductant, geometry of exhaust duct, type of reductant fluid inlet, etc.), but a general purpose is to avoid reductant deposition on cold duct walls and to sufficiently reduce the size of the droplets so that the reductant evaporates before reaching the catalytic NOx converter. The plate structure can also be arranged to contribute to the mixing of evaporated reductant downstream of the plate structure, for instance by creating turbulence in the gas flow.

A portion of the exhaust gas flow is allowed to enter the reductant target space and carry the droplets downstream through the plate structure.

The present invention provides for an efficient evaporation of liquid reductant, it prevents reductant deposition on the walls of the exhaust duct, and it provides for an efficient NOx reduction in the catalytic NOx converter.

In an embodiment of the invention the plate structure occupies only a portion of a cross-section of the exhaust duct so that exhaust gas is allowed to flow along the plate structure at at least one side thereof. Such a design gives rise to a much lower backpressure in the system compared to a plate structure that covers the entire cross-section of the exhaust duct, such as in the arrangement disclosed in US6074619. Moreover, by allowing the exhaust gas to flow along the plate structure the exhaust gas can be used to heat the plate structure all along its length and thereby enhance evaporation of the reductant. Further, the velocity of the portion of exhaust gas flowing through the plate structure can be reduced compared to the main gas flow so that the droplets will stay a longer time in the plate structure. This enhances evaporation. Preferably, the sides of the plate structure downstream of the reductant target space are substantially open towards the surroundings. This enhances heating of the plate structure and improves mixing of evaporated reductant with the gas flow.

In an embodiment of the invention the plate structure comprises at least one further impingement plate arranged downstream of the second impingement plate. The number of impingement plates needed depends on the particular application and design. In many applications it is sufficient to let the (initially large) droplets impinge three times to reduce the droplet size sufficiently. If the droplets initially hits and impinges on the second impingement plate a third and a fourth impingement would thus be needed in such applications.

In an embodiment of the invention the exhaust duct comprises at least a first bend, wherein the reductant target space is positioned in association with said bend. Preferably, the box-like reductant target space is in such a case arranged to be open towards the outside curve/wall of the bend, directed towards the fluid inlet arranged in or close to the outside curve/wall of the bend.

In an embodiment of the invention the fluid inlet is arranged at an outer wall of the exhaust duct.

In an embodiment of the invention the fluid inlet is a nozzle operatively connected to an injector.

The invention also concerns a vehicle comprising an internal combustion engine connected to an exhaust gas aftertreatment system of the above type.

### BRIEF DESCRIPTION OF DRAWINGS

In the description of the invention given below reference is made to the following figure, in which:
- Figure 1: shows, in a perspective sectional view, an embodiment of the inventive system,
- Figure 2: shows, in a perspective view, the plate structure of the system shown in figure 1,
- Figure 3: shows a sectional perspective view of the plate structure of figure 2, and
- Figure 4: shows a sectional side view of the plate structure of figures 2 and 3.

### DESCRIPTION OF EXAMPLE EMBODIMENTS OF THE INVENTION

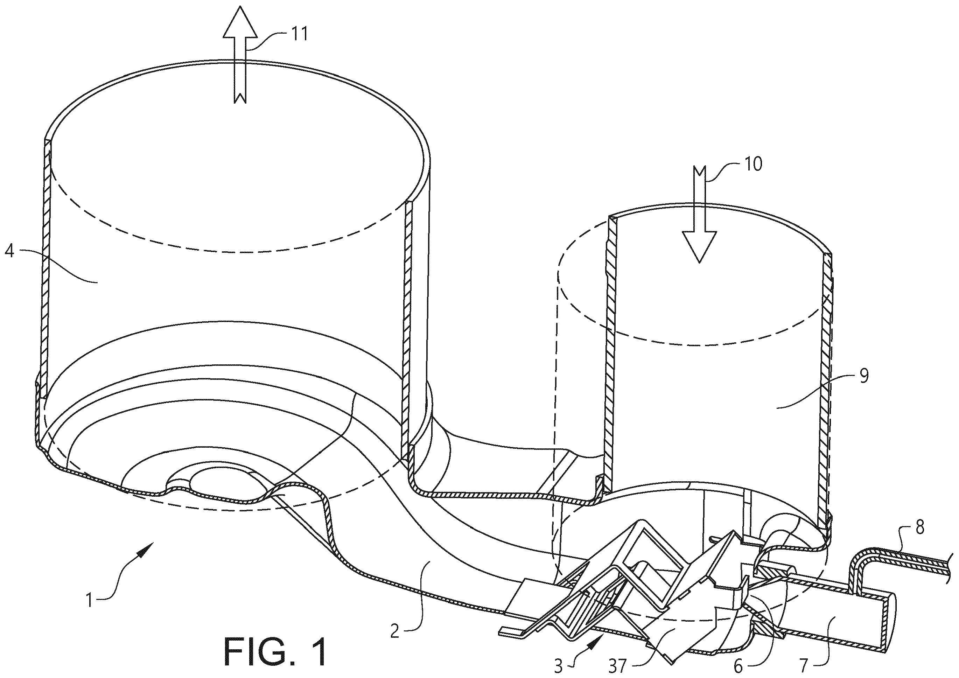

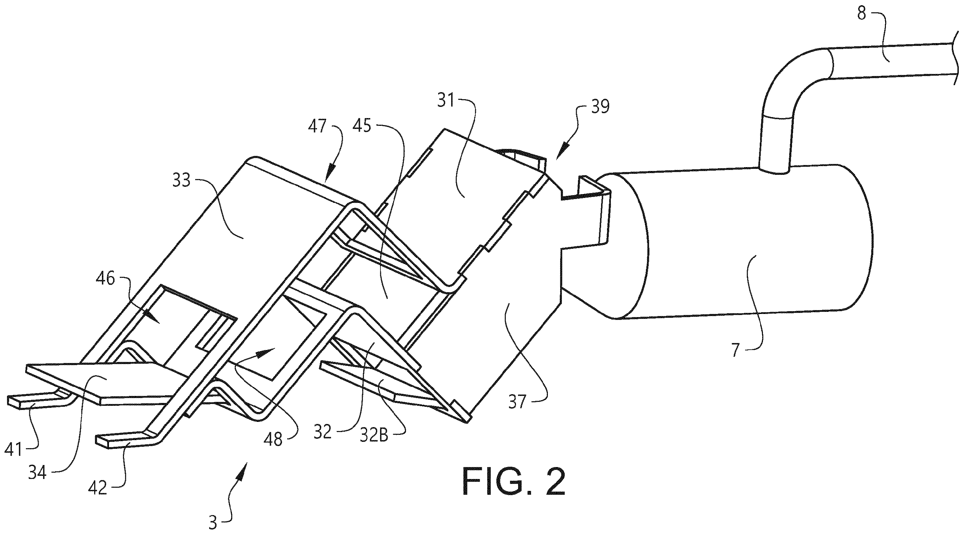

Figure 1 shows an overview of an embodiment of the inventive exhaust gas aftertreatment system for an internal combustion engine. Figures 2-4 show the plate structure of the system. In this example the system is connected to an engine used for providing power for driving a vehicle.

Figure 1 shows only a part of an entire exhaust gas system, and the internal combustion engine is not shown in the figures. As shown in figure 1, the part of the exhaust gas system 1 shown comprises an exhaust gas inlet indicated by arrow 10, an exhaust gas outlet indicated by arrow 11, and an exhaust duct 2 allowing a through-flow of exhaust gas connecting the inlet 10 and outlet 11. The terms inlet and outlet relate only to the part of the system shown in figure 1; the arrows 10 and 11 may simply be regarded as indicators of the direction of the exhaust gas flow. The exhaust gas is generated by an internal combustion engine upstream in the system. Further components may be arranged in the exhaust duct 2 upstream of the inlet/arrow 10 and downstream the outlet/arrow 11.

The exhaust system 1 of figure 1 comprises in flow-order through the exhaust duct 2: an oxidation catalyst 9 (indicated only as a first transparent cylinder), a plate structure 3 and a catalytic NOx converter 4 (indicated only as a second transparent cylinder). The exhaust duct 2 comprises a first bend downstream the oxidation catalyst 9, a substantially straight portion, and a second bend upstream of the catalytic NOx converter 4. A reason for this bent structure is to make the system compact to fit into the limited space available in the vehicle.

A fluid inlet in the form of a nozzle 6 of an injector 7 is arranged to introduce a liquid reductant into the exhaust duct 2 upstream the catalytic NOx converter 4. The nozzle 6 and injector 7, which are depicted only schematically in the figures, are arranged in an outer curve/wall of the first bend of the exhaust duct 2 upstream of the plate structure 3. A feed line 8 feeds liquid reductant to the injector 7.

The system 1 of figure 1 is illustrated with the catalysts 4, 9 arranged vertically and the injector 7 pointing to the right but when the system 1 is arranged in a vehicle it is typically turned 90° anti-clockwise with the injector 7 on top.

The plate structure 3, which is arranged with its upstream end at the nozzle 6 and extending downstream over a part of the substantially straight portion of the exhaust duct 2, comprises a plurality of reductant droplet impinging plates 31-34 (see figures 2-4) arranged in a row in a longitudinal direction of the exhaust duct 2. As will be described more in detail below, the plate structure 3 is arranged so that the portion of exhaust gas that flows through the plate structure 3 is forced to flow in a zig-zag pattern between the plates 31-34. This brings about impingement of reductant droplets (at least of droplets larger than a certain critical size, i.e. droplets too large to follow the zig-zag gas flow) introduced into the exhaust duct 2 on the impingement plates 31-34 during operation of the internal combustion engine.

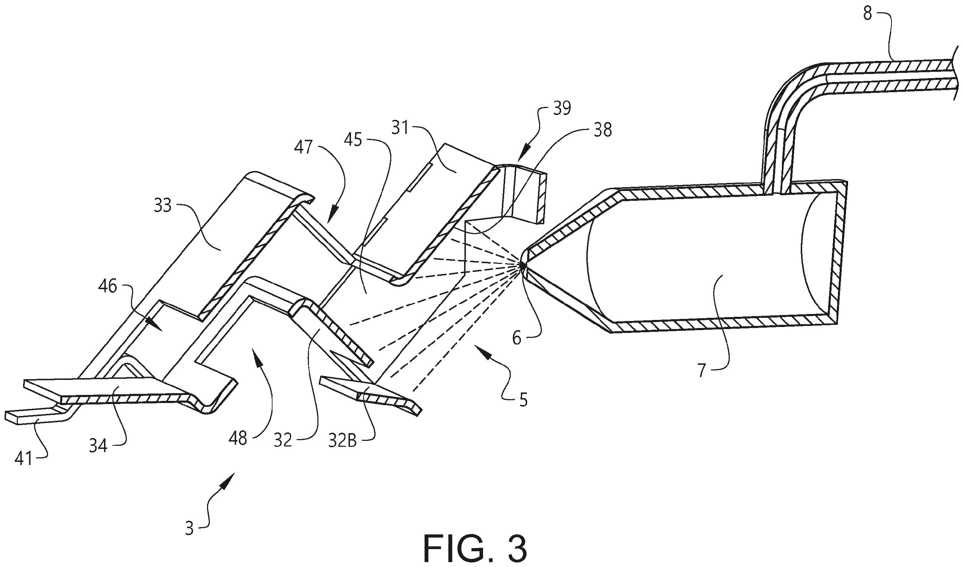

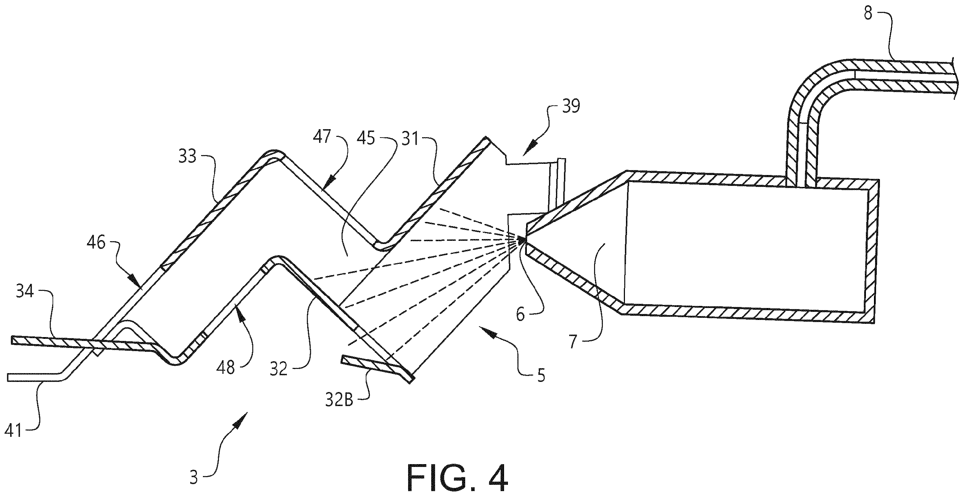

As can be seen in the figures, in particular in figures 3 and 4, the plate structure 3 comprises a reductant target space 5 arranged in an upstream part of the plate structure 3. The reductant target space 5 forms a box-like structure that is open towards the fluid inlet 6 and that comprises a first impingement plate 31, a second impingement plate 32 downstream of the first impingement plate, and first and second side walls 37, 38 connecting the first and second impingement plates 31, 32. The box-like reductant target space 5 is delimited by said first and second impingement plates 31, 32 and first and second side walls 37, 38.

In the embodiment according to the invention shown the reductant target space 5 is open towards the incoming gas flow, i.e. towards the oxidation catalyst 9, by means of an opening 39 between an upstream edge of the first impingement plate 31 and the outer wall of the exhaust duct 2 at the nozzle 6. Each side wall 37, 38 has a part extending towards the wall of the exhaust duct 2 on opposite sides of the nozzle 6. A portion of the exhaust gas is thus allowed to enter the upstream part of the target space via the opening 39. This portion of the gas flow heats the parts constituting the target space 5 and the surroundings thereof and also guides the reductant droplet downstream through the plate structure 3. The main part of the gas flow does not pass the opening 39 but flows at the sides of the plate structure 3 or enters the plate structure further downstream.

The size and geometry of the opening 39, including the distance between the upstream edge of the first impingement plate 31 and the outer wall of the exhaust duct 2 at the nozzle 6, and the shape of the side walls 37, 38 etc., are adapted to, for instance, the shape of the spray cone from the injector 7 (the spray cone should be suitably enclosed by the target space 5), to prevent that reductant droplets are swept away downwards (in relation the figures) towards the outer wall of the duct 2 (if the injector produces small droplets with low momentum the droplets are swept away more easily), to prevent stagnant flow zones in the exhaust duct 2 etc.

The opening 39 may have another design in other applications, such as if the plate structure 3 is not arranged close to a bend of the exhaust duct 2 so that the main direction of the gas flow is more or less parallel to the direction of extension of the plate structure 3 already at the target space 5.

As can best be seen in figures 3 and 4, the fluid inlet nozzle 6 and the reductant target space 5 are arranged in relation to each other so that the reductant, when introduced/sprayed into the exhaust duct 2, is introduced in a direction towards the first and second impingement plates 31, 32 between the first and second side walls 37, 38 and thus into the reductant target space 5. The side walls 37, 38 prevents that reductant splashes sideways towards the outer walls of the exhaust duct, instead the reductant droplets flow downstream in the plate structure 3 as further described below. Most of the injected reductant will initially hit the first or second impingement plates 31, 32 but some reductant may initially hit or even be directed towards the side walls 37, 38.

Besides the first and second impingement plates 31, 32, the plate structure 3 comprises a third and a fourth impingement plate 33, 34 arranged downstream of the second impingement plate 32.

The impingement plates 31-34 are arranged to form a zig-zag path for the exhaust gas and droplets flowing through the plate structure 3. There is no straight longitudinal passage through the entire plate structure 3. The first and third impingement plates 31, 33 are substantially parallel (i.e. the planes in which they extend are substantially parallel) and the second impingement plate 32 is substantially perpendicular to the first and third impingement plates 31, 33. These three impingement plates 31-33 are inclined at around 45° (the second plate 32 is inclined in the opposite direction and may be considered to be inclined 135°) in relation to the direction of extension of the plate structure 3 (i.e. in relation to the longitudinal direction of the exhaust duct 2 along its straight portion between the bends). The fourth impingement plate 34 is close to parallel to the direction of extension of the plate structure 3, but somewhat directed away from the closest outer wall of the exhaust duct 2 to properly guide the flow of exhaust gas and evaporated reductant that leaves the plate structure 3. In the longitudinal direction the first, second and third plates 31-33 are arranged so that an imagined downstream extension of the plate intersects with an adjacent downstream plate at a middle portion thereof. That is, an imagined downstream extension of the first impingement plate 31 intersects with a middle portion of the second impingement plate 32 and so on.

Exhaust gas flowing through the plate structure 3 is thus forced to flow in a zig-zag pattern between the plates 31-34. Sufficiently small droplets, and evaporated reductant, will follow the zig-zag gas flow. However, larger droplets will impinge on the plates until their size is sufficiently small so that they can follow the gas flow. Each impingement onto a plate reduces the size significantly so a few impingements is typically sufficient.

A part 32b of the second impingement plate 32 in the reductant target space 5 is inclined in relation to the rest of the second impingement plate 32 and forms an opening in a downstream direction. The part 32b extends in a plane that is less inclined than the second impingement plate 32, i.e. less than 45°, in relation to the direction of extension of the plate structure 3. Droplets that impinge onto the part 32b may take another path through the plate structure 3 than droplets that impinge onto the rest of the second impingement plate 32. The opening at the part 32b provides for an advantageous flow pattern for the exemplified system 1. For instance, it is avoided that a stagnant gas flow zone is created in that part of the plate structure 3.

The plate structure 3 is fixed to the outer walls of the exhaust duct 2 via feet 41, 42 arranged at the downstream end of the plate structure 3 and via the parts of the side walls 37, 38 close to the nozzle 6. An edge of the reductant target space 5 provides additional support against the outer wall of the exhaust duct 2. The fixing points are small and adapted to transfer as less heat as possible from the plate structure 3.

The plate structure 3 occupies only a portion of a cross-section of the exhaust duct 2 so that exhaust gas is allowed to flow along the plate structure 3 at at least one side thereof. In this case the exhaust gas flows mainly at the sides of and above (with reference to the figures) the plate structure 3. Only a portion of the exhaust gas flows through the plate structure 3.

Except at the side walls 37, 38, the sides of the plate structure 3 are open to the surrounding exhaust duct 2. Openings are also provided on the upper and lower sides of the plate structure 3 (i.e. openings in addition to the opening associated with part 32b on the lower side of the plate structure 3, see above). A first opening 47 is provided on the upper side of the plate structure 3 between the first and the third impinging plates 31, 33. A second opening 48 is provided on the lower side of the plate structure 3 between the second and the fourth impinging plates 32, 34.

Due to all these open parts of the plate structure 3, the hot exhaust gas is allowed to enter and exit and reach all parts of the plate structure 3 and heat it sufficiently to ensure an efficient evaporation of reductant. The openness of the plate structure 3 also allows evaporated reductant to diffuse out from the plate structure 3 along its length and prevents the formation of zones with stagnant flow.

The flow of exhaust gas and reductant (droplets) through the system will now be described with reference to the figures. After having passed the oxidation catalyst 9, the exhaust gas flows towards the plate structure 3 and the first bend of the exhaust duct 2. In general the gas flow of course follows the exhaust duct 2 and proceeds towards and through the NOx converter 4. The exhaust duct 2 is designed to bring about some swirl upstream of the NOx converter to enhance mixing of the evaporated reductant before entering the NOx converter.

A main portion of the exhaust gas will flow at the sides or "above" the plate structure 3 towards the NOx converter 4. A large portion of the gas flow will come in contact with the outside of the reductant target space 5, such as the outside/backside of the first impingement plate 31, and make sure that the parts making up the target space 5 are properly heated. Some portion of the exhaust gas, mainly the gas passing the opening 39 but also gas that initially flows along the outside of one of the side walls 37, 38, will find its way into the reductant target space 5 and follow the path through the plate structure 3. Some other portion will enter the first opening 47 and enter the plate structure 3 somewhat downstream. The exhaust gas will also flow to some degree under the plate structure 3, through the second opening 48 and in many other different and complex ways.

The reductant is sprayed by the nozzle into the target space 5 in line with what is indicated in figures 3 and 4. The path and fate of a certain reductant droplet depends on its initial direction and its size, and on the flow pattern of the exhaust gas. Typically, a large droplet will initially impinge on the first or second impinging plate 31, 32 (including the part 32b) and form a number of smaller droplets. Some part of the initial droplet will evaporate quickly as a result of the contact with the hot impinging plate and/or as a result of the formation of very small droplets that evaporates quickly in the exhaust gas. The smaller droplets will be carried downstream by the exhaust gas so as to impinge on the next impinging plate, for instance from the first impinging plate 31 through a passage 45 to the second impinging plate 32 where a part of the smaller droplet will evaporate quickly in the same way as described above, further to the third impinging plate 33 and through passage 46, possible impinging also on the fourth impinging plate 34 if the size of the remaining droplet(s) is/are sufficient. After the fourth impinging plate 34 the evaporated reductant is mixed with the main flow of exhaust gas.

Smaller droplets remaining after an initial impingement on the part 32b of the second impinging plate 32 is likely to re-enter the plate structure through opening 48 and impinge on the third and/or fourth impinging plate 33, 34, or on other parts of the plate structure 3.

The exact design of the plates, openings etc. can be adapted to a different geometry of the exhaust duct 2, a different position of the nozzle 6, a different exhaust gas mass flow, etc.

In summary, the system 1 and the plate structure 3 (which may be denoted "evaporator" as done below) of the present invention have the following advantages:
- NH3 Uniformity index (Ul) (even distribution of NH3 to SCR catalyst, evaporator + exhaust duct designed so that reductant mixes with exhaust flow)
- Evaporation early in system (droplets reduced in size early in the system to speed up and bring about evaporation during the time interval available)
- Close to 100 % total evaporation (almost all liquid evaporated in the evaporator, no droplets in the SCR)
- SMD decrease (reduced droplet size in evaporator)
- Low backpressure (the evaporator does not significantly interfere with the main gas flow)
- Low amount of cold wall hit (no deposit onto outer walls, the evaporator prevents liquid reductant to reach cold walls in the system)
- Few / small stagnant zones in system (favourable flow pattern)
- The open area around the evaporator transfers heat from the flow to the droplets (the entire evaporator is heated by the gas)
- Guiding of the flow out of the evaporator for best possible distribution

The invention is not limited by the embodiments described above but can be modified in various ways within the scope of the claims.

## Claims

1. An exhaust gas aftertreatment system (1) for an internal combustion engine, said system comprising
- an exhaust duct (2) allowing a through-flow of exhaust gas;
- a catalytic NOx converter (4) arranged in the exhaust duct (2);
- a fluid inlet (6) arranged to introduce a liquid reductant into the exhaust duct (2) upstream the catalytic NOx converter (4);
- a plate structure (3) comprising a plurality of reductant droplet impinging plates (31-34) arranged in a row in a longitudinal direction of the exhaust duct (2) so as to force at least a portion of the exhaust gas to flow in a zig-zag pattern along a portion of the exhaust duct and thereby bring about impingement of reductant droplets introduced into the exhaust duct on the impingement plates during operation of the internal combustion engine, wherein the plate structure (3) comprises:
- a reductant target space (5) arranged in an upstream part of the plate structure (3), wherein the reductant target space forms a box-like structure comprising a first impingement plate (31), a second impingement plate (32) downstream of the first impingement plate, and first and second side walls (37, 38) connecting the first and second impingement plates (31, 32),
- wherein the fluid inlet (6) and the reductant target space (5) are arranged in relation to each other so that the reductant, when introduced into the exhaust duct (2), is introduced in a direction towards the first and second impingement plates (31, 32) between the first and second side walls (37, 38) and thus into the reductant target space (5), the plate structure (3) being arranged such that a main part of the exhaust gas flow does not pass an opening (39) of the reductant target space (5) but flows at sides of the plate structure (3).

2. The exhaust gas system (1) according to claim 1, wherein the plate structure (3) occupies only a portion of a cross-section of the exhaust duct (2) so that exhaust gas is allowed to flow along the plate structure (3) at at least one side thereof.

3. The exhaust gas system (1) according to claim 1 or 2, wherein the plate structure (3) comprises at least one further impingement plate (33, 34) arranged downstream of the second impingement plate (32).

4. The exhaust gas system (1) according to any of the above claims, wherein the exhaust duct (2) comprises at least a first bend, wherein the reductant target space (5) is positioned in association with said bend.

5. The exhaust gas system (1) according to any of the above claims, wherein the fluid inlet (6) is arranged at an outer wall of the exhaust duct (2).

6. The exhaust gas system (1) according to any of the above claims, wherein the fluid inlet is a nozzle (6) operatively connected to an injector (7).

7. Vehicle, comprising an internal combustion engine, wherein the engine is connected to an exhaust gas aftertreatment system according to anyone of the above claims.

## Patentansprüche

1. Abgasnachbehandlungssystem (1) für einen Verbrennungsmotor, wobei das System Folgendes umfasst:
- eine Abgasleitung (2), die das Durchströmen von Abgas zulässt;
- einen NOx-Fahrzeugkatalysator (4), der in der Abgasleitung (2) angeordnet ist;
- einen Fluideinlass (6), der dazu angeordnet ist, ein flüssiges Reduktionsmittel vor dem NOx-Fahrzeugkatalysator (4) in die Abgasleitung (2) einzuleiten;
- eine Plattenstruktur (3), die mehrere Reduktionsmitteltropfenaufprallplatten (31-34) umfasst, die in Längsrichtung der Abgasleitung (2) in einer Reihe angeordnet sind, um zumindest einen Teil des Abgases dazu zu bringen, entlang eines Abschnitts der Abgasleitung in einem Zick-Zack-Muster zu strömen und dadurch während des Betriebs des Verbrennungsmotors das Aufprallen von in die Abgasleitung eingeleiteten Reduktionsmitteltropfen auf die Aufprallplatten zu bewirken, wobei die Plattenstruktur (3) Folgendes umfasst:
- einen Reduktionsmittelzielraum (5), der in einem der Plattenstruktur (3) vorgelagerten Teil angeordnet ist, wobei der Reduktionsmittelzielraum eine kastenartige Struktur ausbildet, die eine erste Aufprallplatte (31), eine der ersten Aufprallplatte nachgelagerte, zweite Aufprallplatte (32) und eine erste und zweite Seitenwand (37, 38), die die erste und zweite Aufprallplatte (31, 32) miteinander verbinden, umfasst,
- wobei der Fluideinlass (6) und der Reduktionsmittelzielraum (5) in Bezug zueinander derart angeordnet sind, dass das Reduktionsmittel, wenn es in die Abgasleitung (2) eingeleitet wird, in Richtung der ersten und zweiten Aufprallplatte (31, 32) zwischen der ersten und zweiten Seitenwand (37, 38) und somit in den Reduktionsmittelzielraum (5) eingeleitet wird, wobei die Plattenstruktur (3) derart angeordnet ist, dass ein Hauptteil der Abgasströmung nicht an einer Öffnung (39) des Reduktionsmittelzielraums (5) vorbei verläuft, sondern an den Seiten der Plattenstruktur (3) entlang strömt.

2. Abgassystem (1) nach Anspruch 1, wobei die Plattenstruktur (3) nur einen Abschnitt des Querschnitts der Abgasleitung (2) belegt, sodass Abgas zumindest an einer Seite entlang der Plattenstruktur (3) strömen kann.

3. Abgassystem (1) nach Anspruch 1 oder 2, wobei die Plattenstruktur (3) mindestens eine weitere Aufprallplatte (33, 34) umfasst, die der zweiten Aufprallplatte (32) nachgelagert angeordnet ist.

4. Abgassystem (1) nach einem der vorstehenden Ansprüche, wobei die Abgasleitung (2) mindestens eine erste Krümmung umfasst, wobei der Reduktionsmittelzielraum (5) mit der Krümmung verbunden positioniert ist.

5. Abgassystem (1) nach einem der vorstehenden Ansprüche, wobei der Fluideinlass (6) an einer Außenwand der Abgasleitung (2) angeordnet ist.

6. Abgassystem (1) nach einem der vorstehenden Ansprüche, wobei der Fluideinlass eine Düse (6) ist, die mit einem Injektor (7) wirkverbunden ist.

7. Fahrzeug, einen Verbrennungsmotor umfassend, wobei der Motor mit einem Abgasnachbehandlungssystem nach einem der vorstehenden Ansprüche verbunden ist.

## Revendications

1. Système de post-traitement de gaz d'échappement (1) pour un moteur à combustion interne, ledit système comprenant
- une conduite d'échappement (2) permettant un écoulement de gaz d'échappement ;
- un convertisseur de NOx catalytique (4) agencé dans la conduite d'échappement (2) ;
- un orifice d'entrée de fluide (6) agencé pour introduire un agent de réduction liquide dans la conduite d'échappement (2) en amont du convertisseur de NOx catalytique (4) ;
- une structure à plaques (3) comprenant une pluralité de plaques de contact de gouttelettes d'agent de réduction (31-34) agencées en une rangée dans une direction longitudinale de la conduite d'échappement (2) afin de forcer au moins une portion du gaz d'échappement pour qu'elle s'écoule en un motif de zig-zag le long d'une portion de la conduite d'échappement et ainsi entraîner le contact de gouttelettes d'agent de réduction introduites dans la conduite d'échappement sur les plaques de contact durant le fonctionnement du moteur à combustion interne, dans lequel la structure à plaques (3) comprend :
- un espace cible d'agent de réduction (5) agencé dans une partie en amont de la structure à plaques (3), dans lequel l'espace cible d'agent de réduction forme une structure en forme de boîte comprenant une première plaque de contact (31), une seconde plaque de contact (32) en aval de la première plaque de contact, et des première et seconde parois latérales (37, 38) raccordant les première et seconde plaques de contact (31, 32),
- dans lequel l'orifice d'entrée de fluide (6) et l'espace cible d'agent de réduction (5) sont agencés l'un par rapport à l'autre pour que l'agent de réduction, lorsqu'il est introduit dans la conduite d'échappement (2), soit introduit dans une direction vers les première et seconde plaques de contact (31, 32) entre les première et seconde parois latérales (37, 38) et ainsi dans l'espace cible d'agent de réduction (5), la structure à plaques (3) étant agencée de telle sorte qu'une partie principale de l'écoulement de gaz d'échappement ne passe pas par une ouverture (39) de l'espace cible d'agent de réduction (5) mais s'écoule sur des côtés de la structure à plaques (3).

2. Système de gaz d'échappement (1) selon la revendication 1, dans lequel la structure à plaques (3) occupe seulement une portion d'une section transversale de la conduite d'échappement (2) pour que le gaz d'échappement soit permis de s'écouler le long de la structure à plaques (3) sur au moins un côté de celle-ci.

3. Système de gaz d'échappement (1) selon la revendication 1 ou 2, dans lequel la structure à plaques (3) comprend au moins une plaque de contact supplémentaire (33, 34) agencée en aval de la seconde plaque de contact (32).

4. Système de gaz d'échappement (1) selon l'une quelconque des revendications précédentes, dans lequel la conduite d'échappement (2) comprend au moins un premier coude, dans lequel l'espace cible d'agent de réduction (5) est positionné en association avec ledit coude.

5. Système de gaz d'échappement (1) selon l'une quelconque des revendications précédentes, dans lequel l'orifice d'entrée de fluide (6) est agencé sur une paroi extérieure de la conduite d'échappement (2).

6. Système de gaz d'échappement (1) selon l'une quelconque des revendications précédentes, dans lequel l'orifice d'entrée de fluide est une buse (6) fonctionnellement raccordée à un injecteur (7).

7. Véhicule, comprenant un moteur à combustion interne, dans lequel le moteur est raccordé à un système de post-traitement de gaz d'échappement selon l'une quelconque des revendications précédentes.
